# EUROPÄISCHE PATENTSCHRIFT

(11) **EP 2 907 146 B1**
(45) Veröffentlichungstag und Bekanntmachung des Hinweises auf die Patenterteilung: **27.05.2020**
(21) Anmeldenummer: 13823926.4
(22) Anmeldetag: 11.10.2013
(51) Int. Cl.: H01F 7/121, H01F 7/16

(54) **SKALIERBARER HOCHDYNAMISCHER ELEKTROMAGNETISCHER LINEARANTRIEB MIT BEGRENZTEM HUB UND GERINGEN QUERKRÄFTEN**
SCALABLE, HIGHLY DYNAMIC ELECTROMAGNETIC LINEAR DRIVE WITH LIMITED TRAVEL AND LOW TRANSVERSE FORCES
ENTRAÎNEMENT LINÉAIRE ÉLECTROMAGNÉTIQUE HAUTEMENT DYNAMIQUE MODULABLE À COURSE LIMITÉE ET PRÉSENTANT DE FAIBLES FORCES TRANSVERSALES

(30) Priorität: 12.10.2012 DE 102012020041
(43) Veröffentlichungstag der Anmeldung: 19.08.2015
(73) Patentinhaber: Rhefor GbR, 12203 Berlin (DE)
(72) Erfinder: MECKLENBURG, Arno, 10999 Berlin (DE)
(74) Vertreter: Behr, Wolfgang
(86) Internationale Anmeldenummer: PCT/DE2013/100352
(87) Internationale Veröffentlichungsnummer: WO 2014/056487

(56) Entgegenhaltungen:
- EP-A1- 0 174 239
- EP-A1- 1 655 755
- EP-A1- 2 388 794
- EP-A2- 0 258 569
- DE-A1- 3 932 274
- DE-U1-202011 050 847
- FR-A1- 2 554 960
- JP-A- S5 671 908
- US-A1- 2007 096 855
- US-B1- 6 476 702

## Beschreibung

### Technisches Gebiet

Die Erfindung betrifft das Gebiet elektromagnetischer Linearaktoren, beispielsweise zum Spannen und Halten von Federn in Federspeicherantrieben.

### Hintergrund

Aus der DE202011050847U1 ist ein Linearaktor bekannt, welcher einen Rahmen (Stator) umfasst, der zumindest teilweise aus weichmagnetischem Material besteht; einen Anker, der zumindest teilweise aus weichmagnetischem Material besteht und der an dem Rahmen derart gelagert ist, dass der Anker entlang einer Längsachse relativ zum Rahmen bewegbar ist. Anker und Rahmen sind derart ausgebildet, dass entlang der Längsachse in einer offenen Position ein Spalt zwischen Anker und Rahmen vorliegt und in einer geschlossenen Position Anker und Rahmen aneinander anliegen, sodass der Spalt geschlossen ist. Eine erste Ankerspule ist mit dem Anker derart verbunden, dass eine auf die erste Ankerspule wirkende Kraft auf den Anker übertragbar ist. Der Linearaktor umfasst des Weiteren Mittel zum Erzeugen eines Erreger-Magnetfeldes, das zumindest teilweise durch Rahmen und Anker geführt und derart gerichtet ist, dass auf die erste Ankerspule, wenn sie bestromt ist, eine Kraft wirkt, die auf den Anker übertragen wird, um den Spalt zu schließen. Rahmen, Anker und Erreger-Magnetfeld sind dabei derart ausgebildet, dass bei geschlossenem Spalt zwischen Rahmen und Anker eine Haltekraft wirkt.

Der Stator und der Anker des aus der DE202011050847U1 bekannte Linearaktor ist rotationssymmetisch um die Bewegungsachse des Ankers aufgebaut. In dem in Fig. 7 dieser Druckschrift gezeigten Ausführungsbeispiel sind drei Ankerspulen und drei Statorspulen vorgesehen. Die Ankerspulen sind in Ringnuten auf der Außenseite des Ankers angeordnet, die Statorspulen in Ringnuten in der Innenseite des Stators. Anker und Stator bestehen aus weichmagnetischem Material mit möglichst hoher Sättigungspolarisation und möglichst hoher relativer Permeabilität.

In der Publikation DE 10 201 1 080 065 A1 wird ein elektromagnetischer Antrieb offenbart, der zum Antrieb elektrischer Schaltgeräte geeignet ist. Antriebe gemäß der Publikation DE 10 201 1 080 065 A1 bestehen aus Elektromagneten, deren Anker insbesondere in der Nähe der Hubanfangslage - also bei weit ge- öffnetem Arbeitsluftspalt - zusätzlich elektrodynamisch angetrieben werden können. Dies wird mit Hilfe wenigstens einer Spule erreicht, welche mit dem Anker mechanisch verbunden ist, und auf die durch Wechselwirkung eines magnetischen Erregerfeldes mit ihrem Strom eine Kraft ausgeübt wird, die auf den Anker übertragen werden kann und diesen in Richtung seiner Hubendlage (geschlossener Arbeitsluftspalt) zu verschieben vermag.

Die Publikation DE 10 201 1 080 065 A1 legt mehrere Ausführungsbeispiele offen, von denen solche besonders zum Antrieb elektrischer Schaltgeräte geeignet sind, welche paarweise an Rahmen und Anker befestigte, koaxial angeord- nete (dünnlagige) Spulen aufweisen. In der Publikation DE 10 201 1 080 065 A1 werden solche am Rahmen befestigten Spulen als"Stützspulen" und die zugehörigen, den Anker zusätzlich antreibenden Spulen als"Schubspulen" bezeichnet (dabei werden Schubspulen üblicherweise in den Anker umlaufende Nuten gewickelt). Schub- und Stützspulen sind koaxial angeordnet, wobei die Schubspule in der Hubanfangslage teilweise in die Stützspule eintaucht. Werden nun diese Schub- und Stützspulen gegensinnig bestromt, so tritt zwischen diesen eine repulsive Wechselwirkung auf, welche den Anker zusätzlich antreibt.

Charakteristisch für die beschriebenen Anordnungen ist, dass unter gewissen Voraussetzungen sehr große volumenspezifische Kräfte dargestellt werden können, während gleichzeitig die Induktivität (beispielsweise einer Reihenschaltung beider Spulen), verglichen mit üblichen Elektromagneten, sehr klein sein kann. Bei hinreichender Dämpfung der Wirbelströme in Rahmen und Anker können damit außerordentlich hohe Kraftanstiegsraten erzielt werden.

Die aus der Publikation DE 10 2011 080 065 A1 vorbekannten Ausführungsbeispiele weisen allerdings zwei Nachteile auf: Schlechte Skalierbarkeit und große Querkräfte auf den Anker. "Schlechte Skalierbarkeit" bedeutet in diesem Zusammenhang vor allem, dass bei der Auslegung der Antriebe für zunehmende Maximalkräfte, Hübe und insbesondere Haltekräfte (gegen bspw. eine Rückstellfeder) die Ankermasse stark zunimmt. Die Ankermasse steigt etwa quadratisch mit der erwünschten nominellen Haltekraft. Dies macht Antriebe nach den in DE 10 2011 080 065 A1 aufgezeigten Ausführungsbeispielen weniger gut geeignet, um beispielsweise in großen Hochspannungsleistungsschaltern die üblichen Federspeicherantriebe zu ersetzen. Vorgenannte Ausführungsbeispiele zeigen während des Betriebs außerdem große (maximale) Querkräfte, die infolge unvermeidlicher Fertigungsungenauigkeiten sowie (elastischer) Verformungen etc. auf den Anker wirken und dessen Lager stark belasten.

Die der Erfindung zugrunde liegende Aufgabe besteht also darin, eine Anordnung zu finden, die besser skalierbar ist und weitaus geringere Querkräfte aufweist als aus der Publikation DE 10 2011 080 065 A1 vorbekannten Antriebe.

### Zusammenfassung

Die genannte Aufgabe wird durch einen Skalierbarer hochdynamischer elektromagnetischer Linearantrieb mit begrenztem Hub gemäß Anspruch 1 gelöst.

Der Anker und/oder die Statorschenkel können aus Blechpaketen oder kunststoffgebundenen weichmagnetischen Pulvern bestehen.

"Zumindest abschnittsweise flacher Anker" bedeutet hier, dass zumindest derjenige Teil des Ankers, der in den Stator - also zwischen dessen Schenkel eintauchen kann, flach ist: Der Abstand zwischen den Statorschenkeln, und damit der Spalt G, in dem sich der Anker (mit möglichst geringen Restluftspalten) bewegen kann, ist wesentlich kleiner als die Tiefe O (Breite) des Ankers (und der Schenkel, senkrecht zum Spalt und senkrecht zur Bewegungsrichtung) und auch kleiner als die Ausdehnung des Ankers entlang der Bewegungsrichtung. Beispielsweise ist die Breite O des (rechteckigen) Ankers mindestens drei Mal so groß wie der Spalt G, also der Normalabstand zwischen den Statorschenkeln. Gemäß einem Ausführungsbeispiel ist die Breite O mindestens fünf mal, insbesondere mindestens zehn Mal so groß wie der Spalt G.

Die erfindungsgemäß "flachen Spulen" sind insofern flach, als dass ihre Länge L (entlang der Spulenachse) jeweils viel kleiner ist als ihr kleinster Außendurchmesser. "Große Wickelhöhe" bedeutet in diesem Zusammenhang, dass die Höhe des Wickelfensters H (entlang der Bewegungsrichtung) sowohl in der Größenordnung des (Nenn-) Hubes S liegt als auch in der Größenordnung der Ausdehnung K der weichmagnetischen Spulenkerne entlang der Bewegungsrichtung, beispielsweise H = 2/3 * S. Ein "Wickelfenster" ist jener Bereich der Spule, die im Betrieb mit Kupfer gefüllt und im Betrieb mit Strom durchflossen ist. Eine symmetrisch aufgebaute Spule hat also zwei gleich lange Wickelfenster, in einem Abstand (normal zur Spulenachse), der der Breite K des Spulenkernes entspricht. Die Abmessung des Wickelfensters entlang der Längsachse (normal zur Spulenachse) des Linearaktors wird als Wickelhöhe H bezeichnet.

Wie erwähnt, eine flache Spule ist allgemein eine Spule deren kleinste Außenabmessung (zwei Mal Wickelhöhe plus kleinste Außenabmessung des Kerns) größer ist als deren Länge. Die Wickelhöhe H ist gemäß einem Ausführungsbeispiel mindestens zwei Mal so groß wie die Länge L der Spule (entlang der Spulenachse). Gemäß einem weiteren Ausführungsbeispiel ist die Wickelhöhe mindestens drei Mal so groß, beispielsweise mindestens fünf Mal so groß wie die Länge L der Spule.

Der Antrieb ist bezüglich der Geometrie aller Teile, an denen zu berücksichtigende elektromagnetische Kraftdichten auftreten ((weich-)magnetische und stromführende Teile), dadurch gekennzeichnet, parallel zur Bewegungsrichtung näherungsweise zwei senkrecht aufeinander stehende Spiegelebenen (Symmetrieebenen) zu besitzen, deren Schnittgrade (welche auch der Längsachse entspricht) somit eine 2-zählige Drehachse ist, die parallel zur Bewegungsrichtung verläuft. (Der Anker ist gleitend an den Statorschenkeln gelagert, Anker und Stator bilden somit ein Gleitlager oder sind mit solchen ausgerüstet)

Aus dieser Symmetriebedingung ergibt sich, dass die Statorspulen paarweise an den Statorschenkeln befestigt werden: Zu jeder an einem ersten Schenkel befestigten ersten flachen Spule gehört eine am zweiten Schenkel befestigte zweite flache Spule. Diese Statorspulen müssen, vergleichbar einer Helmholtz-Spule, gleichsinnig bestromt werden können, wobei beide Spulen erfindungsgemäß während des Betriebs möglichst gleichgroße magnetische Durchflutungen erzeugen können (was in einfacher Weise erreicht werden kann, indem möglichst identische Statorspulen verwendet und diese elektrisch in Reihe geschaltet werden). Bei gleichsinniger Bestromung der Statorspulen während eines Schaltvorganges tritt aus dem Kern einer ersten Statorspule magnetischer Fluss aus (Hauptschluss), durchsetzt den im Spalt liegenden flachen Anker und ggf. die Ankerspule(n) transversal, und tritt in den Kern der zweiten Statorspule ein. (Gleiches gilt für die zweite Statorspule, die Einteilung in erste und zweite Statorspule ist wegen der Symmetriebedingung beliebig.) Der magnetische Rückschluss erfolgt wiederum über Schenkel und Anker. Um den Anker aus der Hubanfangslage in die Hubendlage zu treiben (EIN-Schaltvorgang), wird/werden die Ankerspule(n), welche zwischen den Statorspulen liegt/liegen, gegensinnig zu den Statorspulen so bestromt, dass sie eine (betragsmäßig) möglichst gleich große Durchflutung erzeugt/erzeugen wie die zugehörigen Statorspulen zusammen. Erfindungsgemäß ist die Stromversorgung so bemessen, dass während eines EIN-Schaltvorganges zwischen Anker- und Statorspulen liegender weichmagnetischer Werkstoff magnetisch sättigt und lokal eine Flussdichte erreicht werden kann, welche die Sättigungspolarisation des Werkstoffs übertrifft.

Die Statorschenkel und der Anker sind derart ausgestaltet, dass das von den Statorspulen und der (den) Ankerspule(n) erzeugte Magnetfeld keinen nennenswerten Luftspalt durchfließt. Ein sehr kleiner Luftspalt könnte sich allenfalls durch Fertigungsungenauigkeiten ergeben.

In der Hubanfangslage ist/sind die Ankerspule(n) nicht koaxial mit den zugehörigen Statorspulen angeordnet, sondern vielmehr in Richtung der Hubendlage verschoben (beispielsweise um eine halbe Wickelhöhe 0.5 * H); erfindungsgemäß können also alle Spulen so bestromt werden, dass sich in der Hubanfangslage Anker- und Statorspule(n) entlang der Bewegungsachse abstoßen, wobei die auf die Ankerspule(n) wirkende Kraft von dieser auf den Anker übertragen wird und ihn in Richtung der Hubendlage treibt. Zur Rückstellung in die Hubanfangslage kann eine (zusätzliche) attraktive Kraft erzeugt werden, indem alle Anker- und Statorspule(n) gleichsinnig bestromt werden.

### Kurze Beschreibung der Abbildungen

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
- Figur 1: einen Längsschnitt durch einen Linearaktor gemäß einem Beispiel der Erfindung;
- Figur 2: eine Draufsicht auf den Anker des Aktors aus Fig. 1;
- Figur 3: das simulierte B-Feld des Aktors gemäß Fig. 1 in unterschiedlichen Zuständen (Diagramme 3a bis 3e);
- Figur 4: eine erstes Beispiel einer Treiberschaltung mit zwei verschiedenen Ladespannungen;
- Figur 5: eine zweites Beispiel einer Treiberschaltung mit zwei verschiedenen Ladespannungen.

In den Figuren bezeichnen gleiche Bezugszeichen gleiche oder ähnliche Komponenten mit gleicher oder korrespondierender Bedeutung.

### Detaillierte Beschreibung

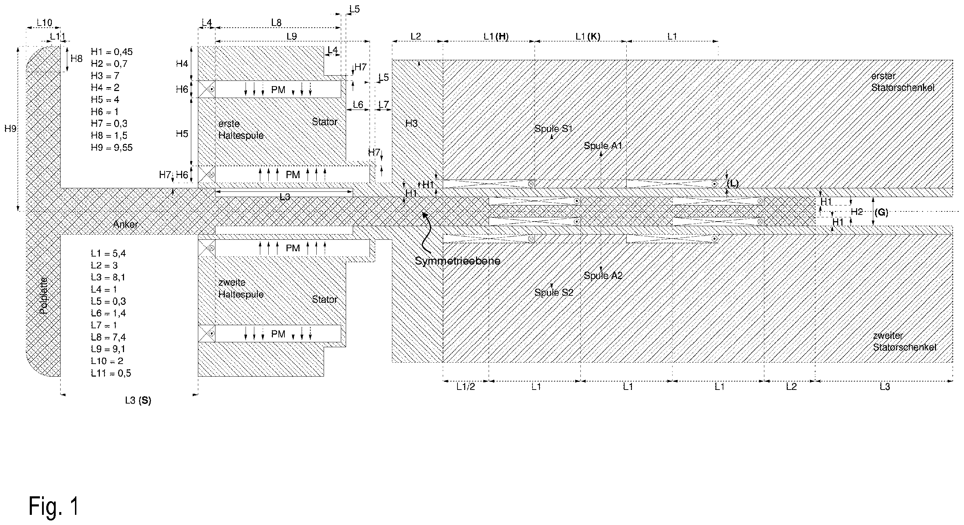

Die Erfindung wird in der Folge anhand eines exemplarischen Beispiels eines Linearantriebs näher erläutert. Fig. 1 zeigt einen Längsschnitt durch einen Beispielantrieb. Der Antrieb ist gemäß dem dargestellten Beispiel der Erfindung nicht rotationssymmetrisch. Im Ausführungsbeispiel ist er von rechteckigem Querschnitt. Die schraffierten Flächen sind als Blechschnitte aufzufassen; durch Paketieren solcher Elektrobleche wird der Magnetkreis des Antriebs gebildet. Durch die Ausgestaltung der Blechschnitte ergeben sich Nuten, in welche die Stator- und Ankerspulen gelegt bzw. gesteckt werden können, die als sehr flache Rechteckspulen (mit rechteckigem "Kern") ausgebildet sind. Die Spulen sind zumindest vergossen und können bedarfsweise verstärkt werden, beispielsweise mithilfe mitvergossener zugfester Fasern, welche vorzugsweise ein höheres Zugmodul aufweisen als der elektrische Draht selbst. Als Draht ist Kupfer-Flachdraht geeignet, jedenfalls ist ein Profildraht vorzuziehen, der einen möglichst hohen (Kupfer-)Füllgrad zulässt. "PM" bezeichnet Permanentmagnete, die Pfeile in den zugehörigen Bauteilen symbolisieren deren Polarisationsrichtung. Die Permanentmagnete (vorzugsweise Neodym-Eisen-Bor, NdFeB) liegen also in Aussparungen, welche durch Formgebung der Statorbleche gebildet werden. In den selben Aussparungen liegen zwei weitere (Rechteck-) Spulen ("Haltespulen"), welche zusammen mit den PM und dem zur Polplatte ausgebildeten hinteren Teil des Ankers als erfindungsgemäßes schaltbares Mittel zum Halten des Antriebs in der Hubendlage (entgegen einer Rückstellkraft) dienen (in der Hubendlage ist der Abstand S=0). Die mehrfache Polteilung dieses Halteapparats erlaubt eine wesentliche Reduzierung der Ankermasse und kommt somit der Dynamik des Antriebs zugute. Eine Bestromung der Haltespulen (Erregung) auch während des EIN-Schaltvorganges, also während der Antrieb anzieht (d.h. der Abstand L3 wird kleiner), kann nicht nur die Kraft des Antriebs in der Nähe der Hubendlage erhöhen, sondern auch die PM aufmagnetisieren und deren Lebensdauer verlängern. Die Bezugszeichen in Klammern - z.B. die Bezeichnung L3 (S) für den Hub - bezeichnen die jeweilige Größe (z.B. den Hub S) allgemein. Die Bezeichnung vor der Klammer bezeichnet einen konkreten Wert (z.B. ist in der Hubanfangslage der Hub S gleich der Länge L3).

Zum Abschalten der Haltekraft (AUS-Schaltvorgang) werden die Haltespulen entgegengesetzt bestromt (Gegenerregung) wie beim EIN-Schaltvorgang, wobei vorteilhafterweise für einen AUS-Schaltvorgang ein geringerer Strom angewendet wird als beim EIN-Schaltvorgang, dies erhöht die Lebensdauer der Permanentmagnete. Zur mechanischen Stabilisierung des Stators (d.h. dem Vermeiden großer Biegemomente) können einzelne Bleche des Stator-Blechpakets im Bereich der PM weniger tief ausgeschnitten sein als die übrigen, sodass zwar genügend Raum zur Unterbringung der Spule verbleibt, die ansonsten durchgehenden Bleche mit den übrigen aber Kammern bzw. Waben ergeben, in welche die PM gelegt werden können. Es ist bei der Auslegung zu berücksichtigen, dass diese durchgehenden Statorbleche magnetische Kurzschlüsse bilden. (Diese anders geformten Bleche, die dem Ausbilden von Kammern zur Aufnahme von PM dienen, müssen weder ganz noch teilweise aus weichmagnetischem Material bestehen, können aber auch aus dem gleichen weichmagnetischen Werkstoff bestehen wie die übrigen Statorbleche.) Halterung des Stators, Lagerung des Ankers und Kraftübertragung auf die Anwendung sind maschinenbauliche Routineaufgaben. Die Lagerung ist dabei insofern besonders leicht zu gewährleisten, als dass der Anker während des Betriebs nur sehr geringe Querkräfte spürt. Das Ensemble aus Stator- und Ankerspulen (S1, S2, A1, A2) kann, zusammen mit dem Magnetkreis, als extreme Ausführung einer linear aufgebauten Transversalflussmaschine aufgefasst werden (die in tiefer lokaler Sättigung arbeiten kann). Für die Ausführung der Erfindung können gewisse geometrische Verhältnisse sowie eine geeignete Auslegung der Stromversorgung vorteilhaft sein. Neben den im Hauptanspruch ausgeführten geometrischen Verhältnissen gilt für das Ausführungsbeispiel auch: L << K (wegen der "weichmagnetischen" Brücke, siehe DE 10 2011 080 065 A1), 2xL ≤ G ist außerdem vorteilhaft.

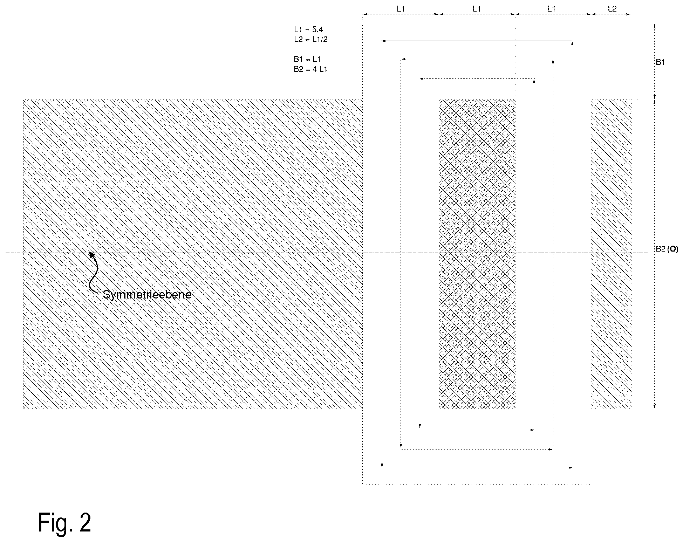

Fig. 2 zeigt eine Draufsicht auf den Anker, wobei die Abmessung B2 der baulichen Tiefe des eigentlichen Magnetkreises entspricht. Im vorliegenden Beispiel werden beispielsweise 100 Elektrobleche mit einer effektiven Dicke von 1mm zu einem B2=100mm tiefen Blechpaket paketiert; der Stator ist beispielsweise von gleicher Tiefe. Hier zeigt sich die Skalierbarkeit des Antriebs: Die erzielbare Haltekraft sowie die darstellbare Maximalkraft des Antriebs gehen nahezu linear mit B2 - und damit nahezu proportional zur bewegten Masse des Antriebs. (Zur Erläuterung des Hauptanspruchs: Der "flache Anker" wird im Ausführungsbeispiel durch O >> G realisiert. Beispielsweise ist O>3·G, z.B. O>5·G oder O>10·G.

Eine mögliche Wickelrichtung einer (flachen!) Ankerspule (siehe Spule A1 in Fig. 1) ist durch die umlaufenden Pfeile symbolisiert. Als weiterer Auslegungshinweis gilt: 2xH + K < O. Die flachen Spulen stehen seitlich um eine Länge B1 vom Aktor ab. In der Praxis wird die Länge B1 der Wickelhöhe H entsprechen.

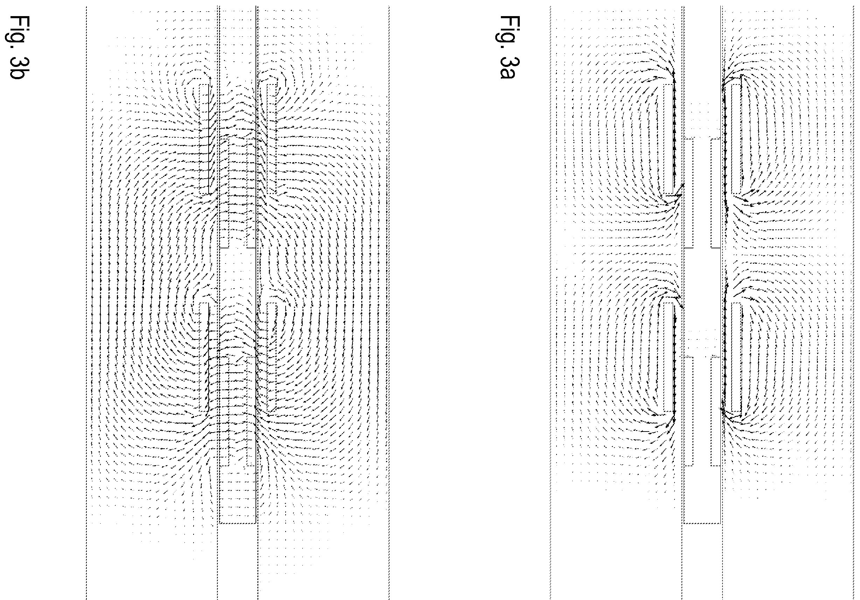

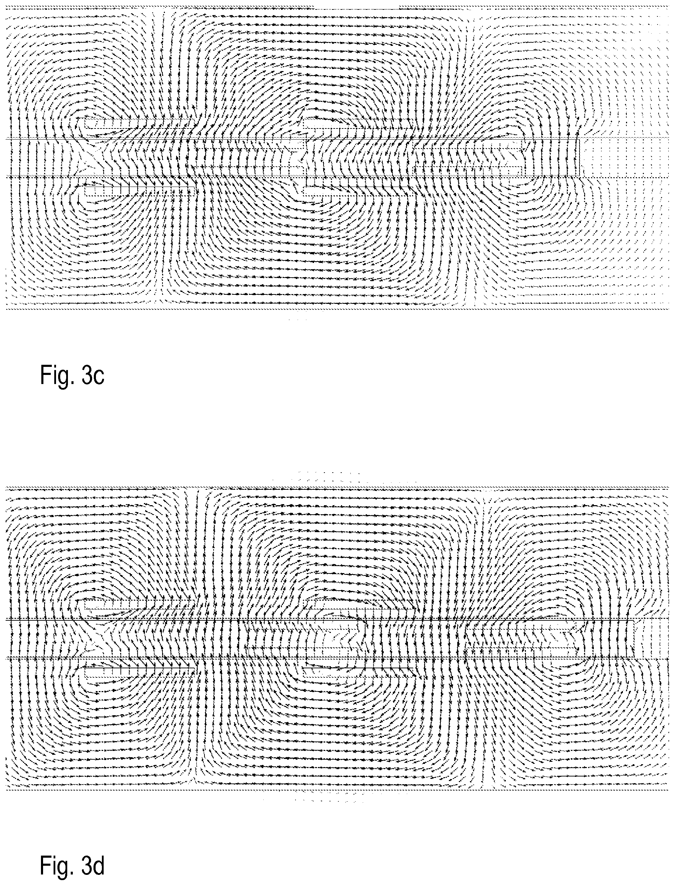

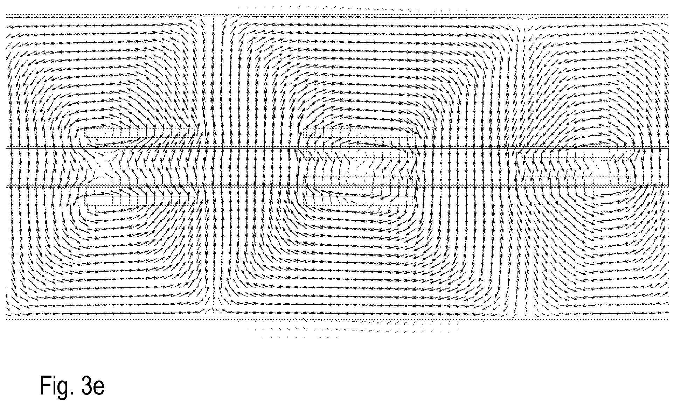

Die Funktionsweise des Antriebs ist leicht anhand der 2D-Simulationen (Fig. 3a, 3b, 3c, 3d, 3e) nachzuvollziehen. Dargestellt wird das B-Feld in statischer Simulation; bei hinreichend feiner Blechung zur Unterdrückung von Wirbelströmen ist das statische B-Feld aber dem im transienten Fall sehr ähnlich. Die Länge der Pfeile ist der Übersichtlichkeit wegen logarithmiert.

Die Simulationen zeigen lediglich den Ausschnitt des Antriebs, der das Ensemble der erfindungsgemäßen flachen Anker- und Statorspulen (A1, A2 bzw. S1, S2 in Fig. 1) enthält, sowie den zugehörigen Magnetkreis. Zur Bestromung können die Spulen so in Reihe geschaltet werden, dass während eines EIN-Schaltvorganges (Anziehen des Ankers) Stator- und Ankerspulen gegensinnig bestromt werden, wobei beispielsweise alle Spulen identisch aufgebaut sind und insbesondere gleiche Draht-Querschnitte und Windungszahlen besitzen. Die Bestromung der Statorspulen (S1, S2 in Fig. 1) erfolgt gleichsinnig, ebenso die der Ankerspulen (A1, A2 in Fig. 1); die Stromrichtungen in Stator- und Ankerspulen sind aber gegensinnig. Im einfachsten Fall wird ein Kondensator mit Hilfe eines Schalters, beispielsweise eines Halbleiterschalters, über die o.g. Reihenschaltung entladen.

Zu Fig. 3a) Beim Einschalten weist der Antrieb zunächst eine hohe Induktivität auf, die Stromanstiegsrate ist gering, was den Schalter schont. In dieser Phase tritt nur ein geringer transversaler (d.h. den Anker durch die horizontale Symmetrieebene durchsetzender) Fluss auf.

Zu Fig. 3b) Bald jedoch tritt der Magnetkreis lokal in die Sättigung ein. Nun wirkt die Anordnung (magnetisch) ähnlich wie ein Differentialtransformator, die Induktivitäten von Anker- und Statorspulen heben sich teilweise auf, die Selbstinduktion der Reihenschaltung kollabiert. Dies bewirkt eine rasche, starke Zunahme der Stromanstiegsrate um beispielsweise eine Größenordnung (Faktor 10), begleitet von einer sehr hohen Kraftanstiegsrate, die (hauptsächlich) von den Zeitkonstanten der Wirbelströme im "Eisen" oder sogar nennenswert vom Skin-Effekt im "Kupfer" limitiert wird. Dies ist bei der Auswahl des weichmagnetischen Werkstoffs, ggf. auch dessen Blechung und der Wahl des Kupferdrahtes (auch dessen Profil) zu berücksichtigen.

Zu Fig. 3c) Zeigt den Antrieb bei 1/3 des Hubes. In deren Nähe erzeugt das Ensemble (S1, S2, A1, A2) bei gleichbleibendem Strom die höchste Kraft. Auch die Reluktanzkraft auf den dargestellten Teil des Ankers trägt zum Anziehen bei.

Zu Fig. 3d) Zeigt den Antrieb, während der Anker bereits 2/3 des Hubes zurückgelegt hat.

Zu Fig. 3e) Zeigt den Antrieb in seiner Hubendlage. Auch hier verschwindet die Kraft zwischen den Spulen nicht. Beim vollständigen (Fig. 3 zeigt nur den rechten Teil des Aktors aus Fig, 1 ohne den Sebsthaltemagneten auf der linken Seite) Antrieb addiert sich zu dieser Kraft selbstverständlich die auf die Polplatte ausgeübte Reluktanzkraft bzw. deren Komponente in Bewegungsrichtung.

Der in Fig. 3a dargestellte Fall wurde bei 20 Amperewindungen gerechnet, in den in Fig. 3b bis 3e gezeigten Fällen bei 20.000 Amperewindungen, wie sie leicht mittels einer Kondensatorentladung erzielt werden können.

Für alle Anker- und Statorspulen A1, A2, S1, S2 des Antriebs gem. Fig.1 können 20 Windungen Kupferlack-Flachdraht verwendet werden, wenn die angegebenen Verhältnismaße als mm ausgefasst werden. Die Haltespulen können eine höhere Windungszahl aufweisen.

Stromversorgungen: Als Stromversorgung für erfindungsgemäße Antriebe kommt im einfachsten Fall ein Kondensator in Betracht, der aufgeladen und der mittels eines Schalters, beispielsweise eines Thyristors, über eine Reihenschaltung der einander zugeordneten Anker- und Statorspulen entladen wird. Im vorliegenden Beispiel Fig. 1 wären dies S1, S2, A1, A2. Werden Anker- und Statorspulen gegensinnig bestromt, wird der Anker in Richtung seiner Hubendlage getrieben. Die Rückstellung des Ankers in die Hubanfangslage kann durch Federn geschehen oder durch gleichsinniges Bestromen von Anker- und Statorspulen oder beides. Zur Erhöhung des elektrischen Wirkungsgrades oder zur Beeinflussung des Kraft-Weg- oder Kraft-Zeit-Verlaufs kann der maximal auftretende Strom verzögert werden, was beispielsweise erfolgen kann, indem eine Induktivität (sättigende oder lineare) zur Verzögerung der Kondensatorentladung verwendet wird. Es können auch mehrere Kondensatoren und Induktivitäten im Sinne von Laufzeitketten oder nach dem Prinzip einer Magnetischen Pulskompression geschaltet werden.

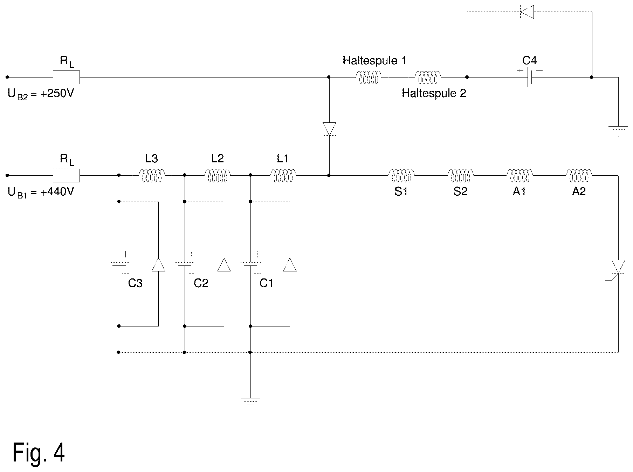

Fig. 4 zeigt eine einfache Beschaltung mit zwei verschiedenen Ladespannungen, welche nicht nur einen gegenüber einer einfachen Kondensator-Entladungsschaltung verbesserten Gesamtwirkungsgrad ergeben kann, sondern vor allem auch eine gleichmäßigere Kraft-Weg-Kennlinie, die (passiv) an die Anwendung angepasst werden kann. Diese Anpassung kann durch geeignete Wahl der Bauteilparameter, insbesondere der Kondensatorkapazitäten und der Windungszahlen der Spulen erfolgen. Weiterhin werden bei geeigneter Auslegung die Haltespulen verzögert erst dann bestromt, wenn sich der Anker in der Nähe der Hubendlage befindet und der Abstand der Polplatte zu den Polschuhen bereits so gering ist, dass die Bestromung der Haltespulen wirksam zur von der Polplatte gespürten Reluktanzkraft (in Bewegungsrichtung) beitragen kann. Fig. 4 zeigt eine Beschaltungen zum ANZIEHEN des Ankers. Zur Rückstellung muss, wie erwähnt, durch eine weitere Beschaltung eine Gegenerregung erzeugt werden, um die Haltekraft der Permanentmagnete zu vermindern. Dann kann entweder eine mit dem Anker verbundene Feder bzw. ein Federsystem diesen zurücktreiben, und/oder die Anker- und Statorspulen werden gleichsinnig bestromt.

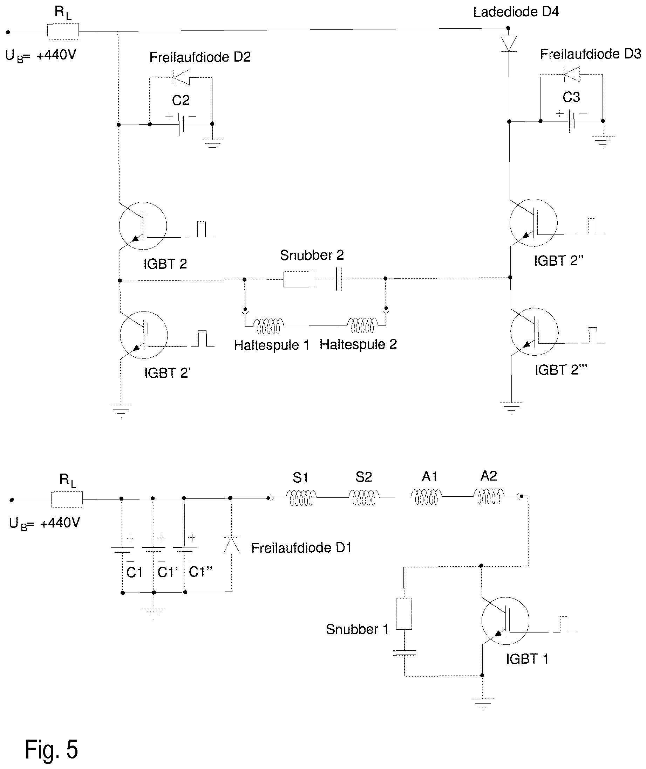

Fig. 5 zeigt, als Alternative, eine aktive Beschattung, die mehrere abschaltbare Halbleiterschalter (im Beispiel IGBTs) verwendet. Dabei sind die IGBTs 2-2"' als Vollbrücke ausgeführt. Durch passende Signalgabe (Ansteuerung) kann die Schaltung zum Laden der Kondensatoren C1-C3 und zu deren Entladung für EIN-Schaltvorgänge sowie AUS-Schaltvorgänge genutzt werden. Mittels RC-Löschgliedern (im Beispiel Snubber 1 und 2) können die Spannungspitzen beim Schalten der induktiven Lasten gedämpft werden, um die IGBTs zu schützen. Die Kondensatoren C1-C3 werden durch jeweils eine Freilaufdiode vor Umpolung geschützt. Solange IGBT 1 und (zumindest) IGBT 2 sowie 2" nichtleitend geschaltet sind, können die Kondensatoren aufgeladen werden. Befindet sich der Antrieb initial in der EIN-Position (geschlossener Arbeitsluftspalt), führt die Leitendschaltung von IGBT 2' und 2" zu einer die Haltekraft der Permanentmagnete kompensierenden Bestromung der Haltespulen durch den Kondensator C3. Nun kann eine rückstellende Federkraft den Antrieb in die AUS-Position bringen (voll geöffneter Arbeitsluftspalt). Nach einem frei wählbaren Zeitfenster ist der umgekehrte Vorgang, das Anziehen des Ankers, möglich, indem die Kondensatorbatterie C1 -C1" über die Reihenschaltung A1, A2, S1, S2 entladen wird, nachdem IGBT 1 leitend geschaltet wurde. Vorteilhafterweise wird erst mit einem gewissen zeitlichen Versatz die Bestromung der Haltespulen aus dem Kondensator C2 durch Nichtleitendschaltung der IGBTs 2' und 2" bei Leitendschaltung der IGBTs 2 und 2''' durchgeführt, wenn die Polplatte in den Einflussbereich der Permanentmagnete (bzw. der zu diesen gehörenden Polschuhe) eingetreten ist. Dieser Vorgang des Öffnen/Schließens der IGBTs kann natürlich auch positions- und/oder geschwindigkeitsgesteuert erfolgen, sofern die Position des Ankers (ggf. zeitabhängig) gemessen wird, wozu eine Vielzahl von Verfahren allgemein bekannt ist.

Möglichkeiten zur Erhöhung des Wirkungsgrades und zur Verkürzung der Stellzeit: Der beschriebene Antrieb kann nicht nur gegen eine Feder anziehen, sondern auch um ein Federsystem ergänzt werden, welches den Anker aus der geöffneten Position (Hubanfangslage) in Richtung der geschlossenen Position (Hubendlage) treibt. Hierzu sollte ein zweites konstruktives Mittel den Anker in der Hubanfangslage gegen diese ergänzende Federkraft halten, beispielsweise eine dem bereits beschriebenen Haltesystem in der Hubendlage (Haltespulen und evtl. Permanentmagnete ("Selbsthaltemagnet")) analoge Konstruktion. Das zweite, ergänzende Federsystem ist so zu gestalten, dass der Anker aus beiden Endlagen (Hubanfang und Hubende) eine ihn in Richtung Hubmittellage beschleunigende Kraft erfährt. Es ist von Vorteil, aber nicht zwingend, wenn das ergänzende Federsystem den Anker zunächst in Richtung Hubendlage beschleunigt bevor es ab einem gewissen Punkt des Hubes bremsend wirkt, sodass das Integral der Federkraft über den Hub Null wird. Letztendlich erhöht sich über den gesamten Hub die Ankergeschwindigkeit, was bekanntermaßen den Wirkungsgrad der Maschine erhöht: Die dem Antrieb zugeführte elektrische Energie wird in Verlust- und Nutzarbeit gewandelt. Das Verhältnis von Nutzarbeit zu zugeführter Energie ist der Wirkungsgrad. Die Nutzarbeit ist eine Funktion des Weges, der endlich ist. Die Verlustarbeit - hauptsächlich ohmsche Verluste - aber ist eine Funktion der Zeit und steigt stetig-monoton weiter. Je schneller ein bestimmter Stellweg zurückgelegt wird, desto geringer wird der ohmsche Anteil und desto höher der Wirkungsgrad.

Nach dieser Methode läuft ein Stellvorgang beispielsweise folgendermaßen ab: Das Mittel, das den Anker wider die Federkraft in seiner Hubanfangslage hält, wird gelöst (bspw. Gegenerregung der "Haltespulen", d.h. des Selbsthaltemagneten). Daraufhin beschleunigt das Federsystem den Anker zunächst in Richtung der Hubmittellage. Währenddessen oder mit einer gewissen Verzögerung wird die Bestromung der Anker- und Statorspulen eingeschaltet. Diese beschleunigen den Anker nun zusätzlich, und zwar mit wesentlich höherem Wirkungsgrad, als wenn sie ihn aus der Ruhelage beschleunigen würden. Die dabei dem Anker mitgeteilte kinetische Energie wird bei der Annäherung an dessen Hubendlage teilweise im Federsystem wieder gespeichert.

## Patentansprüche

1. Skalierbarer hochdynamischer elektromagnetischer Linearantrieb mit begrenztem Hub, umfassend:
- einen Stator, umfassend zwei weichmagnetische Schenkel;
- einen zumindest abschnittsweise flachen Anker aus weichmagnetischem Material, der entlang einer Längsachse zwischen den Schenkeln des Stators beweglich angeordnet ist;
- mindestens zwei flache Statorspulen (S1, S2) mit jeweils einem weichmagnetischem Spulenkern und einer Wickelhöhe (H), die am Stator befestigt sind, wobei die Spulenkerne der flachen Statorspulen (S1, S2) jeweils einen Teil der weichmagnetischen Schenkel bilden oder mit diesen magnetisch leitend verbunden sind,
wobei die zwei flachen Statorspulen (S1, S2) an zwei gegenüber liegenden Seiten der Statorschenkel und koaxial angeordnet sind, sodass die zwei flachen Statorspulen (S1, S2) eine gemeinsame Spulenachse aufweisen, die normal zur Längsachse steht;
- mindestens eine flache Ankerspule (A1, A2) mit einem weichmagnetischem Spulenkern und einer Wickelhöhe (H), die am Anker befestigt ist, wobei der Spulenkern der flachen Ankerspule einen Teil des Ankers bildet und/oder aus diesem gebildet werden kann, oder die Ankerspule sich, mit ihrem weichmagnetischen Spulenkern, liegend in einer Aussparung des flachen Ankers befindet, wobei die mindestens eine Ankerspule (A1, A2) eine Spulenachse aufweist, die normal zur Längsachse und parallel zu der Spulenachse der Statorspulen (S1, S2) liegt, und bei dem die mindestens eine Ankerspule (A1, A2) gegensinnig zu den Statorspulen (S1, S2) bestromt werden kann, um den Anker von der Hubanfangslage in die Hubendlage zu bewegen;
- eine wohldefinierte Hubanfangs- und Hubendlage;
- mindestens ein schaltbares Mittel, das dazu ausgebildet ist, den Anker entgegen einer Rückstellkraft in mindestens einer Endlage zu halten;
- eine schaltbare Stromversorgung umfassend einen Energiespeicher und zumindest einen Schalter, bei dem das schaltbare Mittel ein mechanisch mit dem Anker verbundener Selbsthaltemagnet oder eine mechanische Verklinkung ist.

2. Linearantrieb gemäß Anspruch 1, bei dem der Energiespeicher einer Kondensatorbatterie ist.

3. Linearantrieb nach einem der Ansprüche 1 oder 2, bei dem der Anker und/oder die Statorschenkel aus Blechpaketen oder kunststoffgebundenen weichmagnetischen Pulvern bestehen.

4. Linearantrieb nach einem der Ansprüche 1 bis 3, bei dem der Anker, normal zur Längsachse, einen rechteckigen Querschnitt aufweist, dessen Höhe (G) wesentlich kleiner ist als dessen Breite (O).

5. Linearantrieb nach einem der Ansprüche 1 bis 4, bei dem die flachen Statorspulen (S1, S2) und/oder die mindestens eine flache Ankerspule (A1, A2) normal zur Längsachse eine Länge (L) aufweisen, und entlang der Längsachse eine Wickelhöhe (H), die mindestens zwei mal so groß ist wie die Länge (L).

6. Linearantrieb nach Anspruch 5, bei dem die Wickelhöhe (H) der flachen Statorspulen (S1, S2) und/oder der mindestens einen flachen Ankerspule (A1, A2) rund zwei Drittel des maximalen Hubs (S) des Linearantriebs entspricht.

7. Linearantrieb nach einem der vorangegangenen Ansprüche, bei dem die Statorspulen (S1, S2) gleichsinnig bestromt werden können.

8. Linearantrieb nach Anspruch 1, bei dem, in der Hubanfangslage, die Spulenachse der mindestens einen Ankerspule (A1, A2) relativ zur Spulenachse der Statorspulen (S1, S2) entlang der Längsachse versetzt angeordnet ist, sodass ein Normalabstand zwischen den Spulenachsen größer wird, wenn sich der Anker aus der Hubanfangslage heraus- und zur Hubendlage hinbewegt, wobei bevorzugt der Versatz zwischen den Spulenachsen der mindestens einen Ankerspule (A1, A2) und der Statorspulen (S1, S2), rund der Hälfte der Wickelhöhe (H) einer Statorspule (S1, S2) entspricht, oder wobei bevorzugt der Versatz zwischen den Spulenachsen der mindestens einen Ankerspule (A1, A2) und der Statorspulen (S1, S2), in einem Bereich liegt zwischen 0,5 und 1 Mal der Wickelhöhe (H) einer Statorspule (S1, S2) liegt.

9. Linearantrieb nach einem der vorangegangenen Ansprüche, bei dem die mindestens eine Ankerspule (A1, A2) und die Statorspulen (S1, S2) so ausgelegt sind und derart bestromt werden, dass die mindestens eine Ankerspule (A1, A2) annähernd die gleiche magnetische Durchflutung erzeugt wie die beiden Statorspulen (S1, S2).

10. Linearantrieb nach einem der vorangegangenen Ansprüche, bei dem zum Antrieb des Aktors aus der Hubanfangslage in die Hubendlage die Bestromung derart dimensioniert ist und der Werkstoff des Ankers und/oder des Stators im Bereich zwischen der mindestens einen Ankerspule (A1, A2) und den Statorspulen (S1, S2) derart gewählt ist, dass jener magnetisch sättigt und lokal eine magnetische Flussdichte erreicht werden kann, welche die Sättigungspolarisation des Werkstoffs übersteigt.

11. Linearantrieb nach einem der vorangegangenen Ansprüche, bei dem Statorschenkel und Anker derart ausgestaltet sind, dass das von den Statorspulen (S1, S2) und der mindestens einen Ankerspule (A1, A2) erzeugte Magnetfeld keinen nennenswerten Luftspalt durchfließt.

12. Linearantrieb nach einem der vorangegangenen Ansprüche, wobei der Linearantrieb zwei Symmetrieebenen aufweist, deren Schnittgerade der Längsachse entspricht.

13. Linearantrieb nach einem der vorangegangenen Ansprüche, wobei der Linearantrieb zwei Symmetrieebenen aufweist, deren Schnittgerade eine 2-zählige Drehachse ist und der Längsachse entspricht.

## Claims

1. Scalable, highly dynamic electromagnetic linear drive having limited stroke, comprising:
- a stator which has two soft magnet arms;
- an at least partially flat armature made of soft magnet material, which is arranged in a manner allowing movement along a longitudinal axis between the arms of the stator;
- at least two flat stator coils (S1, S2) each with a soft magnet stator coil core a winding height (H), which are attached to the stator, wherein the coil cores of the flat stator coils (S1, S2) each form a part of the soft magnetic arms or are connected therewith in a magnetically conductive manner,
wherein the two flat stator coils (S1, S2) are arranged on two sides of the stator arms which lie opposite each other, and are arranged coaxially, such that the two flat stator coils (S1, S2) comprise a common coil axis which is oriented normal to the longitudinal axis;
- at least one flat armature coil (A1, A2) with a soft magnet flat coil core and a winding height (H), which is attached to the armature, wherein the coil core of the flat armature coil is part of the armature and/or can be formed from the same, or the armature coil is positioned, with its soft magnet coil core, lying in a recess of the flat armature, wherein the at least one armature coil (A1, A2) comprises a coil axis, which is orientated normal to the longitudinal axis and parallel to the coil axis of the stator coils (S1, S2), and in which current can be fed to the at least one armature coil (A1, A2) in a direction opposite to the stator coils (S1, S2) in order to move the armature from the stroke initiation position into the stroke end position;
- a well-defined stroke initiation position and stroke end position;
- at least one switchable means which is designed to hold the armature in at least one end position against a return force;
- a switchable power supply comprising an energy storage device and at least one switch, in which the switchable means is a self-locking magnet which is mechanically connected to the armature, or is a mechanical latch.

2. Linear drive according to claim 1, wherein the energy storage device is a capacitor bank.

3. Linear drive according to claim 1 or 2, wherein the armature and/or the stator arms consist of laminated sheet packages or plastic-bonded soft magnet powders.

4. Linear drive according to any one of claims 1 to 3, wherein the armature has a rectangular cross-section, normal to the longitudinal axis, the height (H) of which is substantially less than the width (O) thereof.

5. Linear drive according to any one of claims 1 to 4, wherein the flat stator coils (S1, S2) and/or the at least one flat armature coil (A1, A2) have a length (L), normal to the longitudinal axis, as well as a winding height (H) along the longitudinal axis which is at least the size of the length (L).

6. Linear drive according to claim 5, wherein the winding height (H) of the flat stator coils (S1, S2) and/or of the at least one flat armature coil (A1, A2) is around two-thirds of the maximum stroke (S) of the linear drive.

7. Linear drive according to any one of the preceding claims, wherein current can be fed to the stator coils (S1, S2) in the same direction.

8. Linear drive according to claim 1, wherein, in the stroke initiation position, the coil axis of the at least one armature coil (A1, A2) is arranged with an offset relative to the coil axis of the stator coils (S1, S2) along the longitudinal axis, such that a normal space between the coil axes becomes greater when the armature is moved out of the stroke initiation position and toward the stroke end position, wherein the offset between the coil axes of the at least one armature coil (A1, A2) and the stator coils (S1, S2) is preferably around half of the winding height (H) of a stator coil (S1, S2), or wherein the offset between the coil axes of the at least one armature coil (A1, A2) and the stator coils (S1, S2) preferably is in a range between 0.5 and 1 times the winding height (H) of a stator coil (S1, S2).

9. Linear drive according to any one of the preceding claims, wherein the at least one armature coil (A1, A2) and the stator coils (S1, S2) are designed in such a manner that, and current is fed to the same in such a manner that, the at least one armature coil (A1, A2) generates approximately the same magnetomotive force as the two stator coils (S1, S2).

10. Linear drive according to any one of the preceding claims, wherein, for driving the actuator from the stroke initial position to the stroke end position, the level of flow of current is chosen such that, and the material of the armature and/or of the stator in the region between the at least one armature coil (A1, A2) and the stator coils (S1, S2) is chosen such that, the same is magnetically saturated, and is able to achieve a local magnetic flux density which exceeds the saturation polarization of the material.

11. Linear drive according to any one of the preceding claims, wherein the stator arms and armature are designed in such a manner that the magnetic field generated by the stator coils (S1, S2) and the at least one armature coil (A1, A2) does not flow through any appreciable air gap.

12. Linear drive according to any one of the preceding claims, wherein the linear drive has two planes of symmetry, the line of intersection of which corresponds to the longitudinal axis.

13. Linear drive according to any one of the preceding claims, wherein the linear drive has two planes of symmetry, the line of intersection of which is an axis of rotation with two points of symmetry, and corresponds to the longitudinal axis.

## Revendications

1. Entraînement linéaire électromagnétique hautement dynamique modulable à course limitée, comprenant :
- un stator comprenant deux branches magnétiques douces ;
- un induit au moins par endroits plat composé d'un matériau magnétique doux, qui est disposé de manière mobile le long d'un axe longitudinal entre les branches du stator ;
- au moins deux bobines de stator (S1, S2) plates avec respectivement une partie centrale de bobine magnétique douce et une hauteur d'enroulement (H), qui sont fixées au niveau du stator, dans lequel les parties centrales de bobine des bobines de stator (S1, S2) plates forment respectivement une partie des branches magnétiques douces ou sont reliées à celles-ci de manière conductrice magnétiquement,
dans lequel les deux bobines de stator (S1, S2) plates sont disposées au niveau de deux côtés se faisant face des branches de stator et sont disposées de manière coaxiale de sorte que les deux bobines de stator (S1, S2) plates présentent un axe de bobine commun, qui est à la normale par rapport à l'axe longitudinal ;
- au moins une bobine d'induit (A1, A2) plate avec une partie centrale de bobine magnétique douce et une hauteur d'enroulement (H), qui est fixée au niveau de l'induit, dans lequel la partie centrale de bobine de la bobine d'induit plate forme une partie de l'induit et/ou peut être formée à partir de celle-ci, ou la bobine d'induit se trouve, par sa partie centrale de bobine magnétique douce, à l'horizontale dans un évidement de l'induit plat, dans lequel l'au moins une bobine d'induit (A1, A2) présente un axe de bobine, qui se situe à la normale par rapport à l'axe longitudinal et de manière parallèle par rapport à l'axe de bobine des bobines de stator (S1, S2), et où l'au moins une bobine d'induit (A1, A2) peut être alimentée en courant dans un sens opposé par rapport aux bobines de stator (S1, S2) pour déplacer l'induit depuis la position de départ de course dans la position de fin de course ;
- une position de départ de course et de fin de course bien définie ;
- au moins un moyen pouvant être commuté, qui est réalisé pour maintenir l'induit à l'encontre d'une force de rappel dans au moins une position de fin ;
- une alimentation en courant pouvant être commutée comprenant un accumulateur d'énergie et au moins un commutateur, où le moyen pouvant être commuté est un aimant de maintien automatique relié mécaniquement à l'induit ou un encliquetage mécanique.

2. Entraînement linéaire selon la revendication 1, où l'accumulateur d'énergie est une batterie de condensateur.

3. Entraînement linéaire selon l'une quelconque des revendications 1 ou 2, où l'induit et/ou les branches de stator sont constitués de paquets de tôles ou de poudres magnétiques douces liées par une matière synthétique.

4. Entraînement linéaire selon l'une quelconque des revendications 1 à 3, où l'induit présente, à la normale par rapport à l'axe longitudinal, une section transversale rectangulaire, dont la hauteur (G) est sensiblement inférieure à sa largeur (O).

5. Entraînement linéaire selon l'une quelconque des revendications 1 à 4, où les bobines de stator (S1, S2) plates et/ou l'au moins une bobine d'induit (A1, A2) plate présentent de manière normale par rapport à l'axe longitudinal une longueur (L), et, le long de l'axe longitudinal, une hauteur d'enroulement (H), qui est au moins deux fois plus grande que la longueur (L).

6. Entraînement linéaire selon la revendication 5, où la hauteur d'enroulement (H) des bobines de stator (S1, S2) plates et/ou de l'au moins une bobine d'induit (A1, A2) plate correspondent à peu près à deux tiers de la course (S) maximale de l'entraînement linéaire.

7. Entraînement linéaire selon l'une quelconque des revendications précédentes, où les bobines de stator (S1, S2) peuvent être alimentées en courant dans le même sens.

8. Entraînement linéaire selon la revendication 1, où, dans la position de départ de course, l'axe de bobine de l'au moins une bobine d'induit (A1, A2) est disposé de manière décalée le long de l'axe longitudinal par rapport à l'axe de bobine des bobines de stator (S1, S2), de sorte qu'une distance normale entre les axes de bobine est plus grande quand l'induit se déplace pour sortir de la position de départ de course et en direction de la position finale de course, dans lequel de manière préférée le décalage entre les axes de bobine de l'au moins une bobine d'induit (A1, A2) et des bobines de stator (S1, S2) correspond à peu près à la moitié de la hauteur d'enroulement (H) d'une bobine de stator (S1, S2), ou dans lequel de manière préférée le décalage entre les axes de bobine de l'au moins une bobine d'induit (A1, A2) et des bobines de stator (S1, S2) se situe dans une plage entre 0,5 et 1 fois la hauteur d'enroulement (H) d'une bobine de stator (S1, S2).

9. Entraînement linéaire selon l'une quelconque des revendications précédentes, où l'au moins une bobine d'induit (A1, A2) et les bobines de stator (S1, S2) sont configurées de telle sorte et sont alimentées en courant de telle manière que l'au moins une bobine d'induit (A1, A2) génère approximativement le même débit magnétique que les deux bobines de stator (S1, S2).

10. Entraînement linéaire selon l'une quelconque des revendications précédentes, où pour entraîner l'actionneur depuis la position de départ de course dans la position finale de course, l'alimentation en courant est dimensionnée de telle manière et le matériau de l'induit et/ou du stator dans la zone entre l'au moins une bobine d'induit (A1, A2) et les bobines de stator (S1, S2) est choisi de telle manière que celui-ci précisément peut être saturé magnétiquement et une densité de flux magnétique peut être atteinte localement, laquelle dépasse la polarisation de saturation du matériau.

11. Entraînement linéaire selon l'une quelconque des revendications précédentes, où des branches de stator et des induits sont configurés de telle manière que le champ magnétique généré par les bobines de stator (S1, S2) et l'au moins une bobine d'induit (A1, A2) ne traverse aucun entrefer notable.

12. Entraînement linéaire selon l'une quelconque des revendications précédentes, dans lequel l'entraînement linéaire présente deux plans de symétrie, dont la droite d'intersection correspond à l'axe longitudinal.

13. Entraînement linéaire selon l'une quelconque des revendications précédentes, dans lequel l'entraînement linéaire présente deux plans de symétrie, dont la droite d'intersection est un axe de rotation d'ordre 2 et correspond à l'axe longitudinal.
